# EUROPÄISCHE PATENTANMELDUNG

(11) **EP 1 652 662 A1**
(43) Veröffentlichungstag der Anmeldung: **03.05.2006**
(21) Anmeldenummer: 05021906.2
(22) Anmeldetag: 08.10.2005
(51) Int. Cl.: B32B 3/02, B32B 3/12, E06B 3/70, E04C 2/36

(54) **Verfahren und Maschine zum Herstellen von formatierten Leichtbauplatten**

(30) Priorität: 29.10.2004 DE 102004052931
(71) Anmelder: IMA Klessmann GmbH Holzbearbeitungssysteme, 32312 Lübbecke (DE)
(72) Erfinder: Hucke, Helmut, 32312 Lübbecke (DE); Windmann, Horst, 32584 Löhne (DE)
(74) Vertreter: Elbertzhagen, Otto

(57) **Zusammenfassung**

Die erfindungsgemäßen Platten haben eine leichtgewichtige Mittellage (4), eine obere Decklage (6) sowie eine untere Decklage (5), mit denen die Mittellage beplankt ist, und randliche Rahmenleisten (7) aus einem festen Werkstoff, die zwischen über die Mittellage (4) hinausreichenden Randbereichen der Decklagen fest angeordnet sind. Um Platten dieser Art, die insbesondere für die Weiterverarbeitung im Möbelbau und im Innenausbau bestimmt sind, einfacher herstellen zu können, wird eine großformatige Leichtbauplatte (1) in Einzelplatten (2) mit an den Schmalseiten offenliegender Mittellage aufgeteilt. Danach werden an jeder dieser einzelnen Platten (2) an den Schmalseiten die Rahmenleisten (7) eingebracht, indem in einem maschinellen Durchlaufverfahren entlang der jeweiligen Platten-Schmalseite zwischen den Decklagen (5,6) die Mittellage (4) unter Freilegen eines an die vorgesehene Rahmenleiste angepaßten Aufnahmeraums (12) weggeschnitten und im Anschluß daran in diesen Aufnahmeraum (12) die Rahmenleiste (7) eingeklebt wird.

## Beschreibung

Die Erfindung bezieht sich auf ein Verfahren zum Herstellen von formatierten Leichtbauplatten gemäß dem Oberbegriff des Patentanspruchs 1 und auf eine Maschine zur Ausübung dieses Verfahrens gemäß dem Oberbegriff des Patentanspruchs 9.

Leichtbauplatten der genannten Art, wie sie aus dem Dokument DE 296 09 442 U1 bekannt sind, werden zunehmend im Möbelbau und im Innenausbau eingesetzt, weil sie leichter als im wesentlichen massive oder homogene Platten sind und auch die Verwendung von Abfallprodukten für die Mittellage erlauben. Aufgrund ihres geringeren Gewichtes haben sie für die Handhabung, den Transport und auch für manche Bearbeitungsvorgänge Vorteile, des weiteren sind sie aufgrund der Sperrwirkung zwischen der Mittellage und den sie beplankenden Decklagen weitgehend verzugfrei. Ein Nachteil der Leichtbauplatten liegt in der nur geringen Festigkeit der Mittellage, die aus einer aus Pappe bestehenden Wabenstruktur, aus einem Schaumstoff oder einem geblähten mineralischen Material bestehen kann, weswegen daran ohne weiteres Beschläge, wie Scharnierbänder, Handgriffe oder dergleichen, nicht in üblicher Weise, wie mittels Schrauben oder Einbohren, befestigt werden können. Deshalb sind die randlichen, aus einem festeren Werkstoff bestehenden Rahmenleisten vorgesehen, die vor allem an den Befestigungsstellen die Mittellage ersetzen und die in sie eingedrehten Befestigungsschrauben einen festen Halt bieten.

Leichtbauplatten mit solchen randlichen Rahmenleisten, die bereits das für die Weiterverarbeitung notwendige Format haben, werden bislang im Legeverfahren in Einzelfertigung hergestellt. Hierbei wird zunächst die untere Decklage ausgelegt, und darauf werden entlang ihrer Ränder die Rahmenleisten auf die Decklage aufgelegt. Anschließend wird die Mittellage, die ein entsprechend kleineres Längen- und Breitenmaß als die untere Decklage aufweist, in den von den Rahmenleisten und der unteren Decklage umgrenzten Raum von oben her eingeleg. Als letztes wird die obere Decklage auf die Mittellage und die Rahmenleisten aufgelegt. Es versteht sich, daß Klebmittel vorgesehen werden, um die Decklagen, die Mittellage und die Rahmenleisten miteinander fest zu verbinden.

Andererseits ist es bekannt, formatierte Platten für den Möbelbau oder Innenausbau, die aus Holz, Holzspan- oder -fasermaterialien bestehen, in der Weise herzustellen, daß eine großformatige Ausgangsplatte schnittoptimiert aufgeteilt wird. Man erhält hierdurch Einzelplatten, die gleiche und/oder unterschiedliche Formate haben, um in der nachfolgenden Bearbeitung eine kommissionsweise Fertigung ohne Zwischenläger zu ermöglichen.

Vor allem Möbel lassen sich dadurch rationeller herstellen.

Der Erfindung liegt die Aufgabe zugrunde, ein Verfahren und eine Maschine der eingangs genannten Art zu schaffen, um die Fertigung formatierter Leichtbauplatten, die insbesondere für die Weiterverarbeitung im Möbelbau und im Innenausbau bestimmt sind, zu vereinfachen.

Diese Aufgabe wird zum einen durch die Verfahrensmerkmale gemäß dem Anspruch 1 und zum anderen durch die gegenständlichen Merkmale nach Anspruch 9 gelöst.

Für die Erfindung ist wesentlich, daß die Leichtbauplatten gleichen und/oder unterschiedlichen Formats aus einer großformatigen Ausgangsplatte gewonnen werden, die sich optimal in die einzelnen formatierten Leichbauplatten aufteilen läßt. Nach dem Aufteilen werden die Einzelplatten, an deren Schmalseiten noch die aus dem Leichtbauwerkstoff bestehende Mittellage offenliegt, im Durchlaufverfahren bearbeitet, um an den betreffenden Plattenrändern die dort zur Festigkeitserhöhung erforderlichen Rahmenleisten anzubringen. Hierbei wird erreicht, daß bei der fertigen, formatierten Leichtbauplatte die Rahmenleisten von den Randbereichen der oberen und der unteren Decklage an den Plattenbreitseiten kaschiert sind und an den Plattenschmalseiten die Außenflächen abgesehen von den dortigen Kanten der Decklagen von der in sich geschlossenen Außenseite der Rahmenleisten gebildet werden. Die Bearbeitung von der einzelnen Rohplatte bis zur formatierten Platte erfolgt im Durchlaufverfahren, was bei der üblichen Quadrat- oder Rechteckform der Platten nach und nach entlang der vier Plattenränder oder jeweils gleichzeitig an zwei einander gegenüberliegenden Plattenrändern vorgenommen wird.

Die Erfindung wird nachfolgend anhand der Zeichnung noch näher erläutert. Dabei zeigen:
- Fig. 1: die Draufsicht auf eine großformatige Ausgangsplatte in der Ausführung als Leichtbauplatte,
- Fig. 2: einen Schnitt durch die Platte von Fig. 1 entlang der dortigen Linie II-II,
- Fig. 3: die Draufsicht auf eine fertige, formatierte Einzelplatte,
- Fig. 4: einen Schnitt durch die Einzelplatte gemäß Fig. 3 entlang der dortigen Linie IV-IV,
- Fig. 5: die Draufsicht auf eine Maschine zur Herstellung der formatierten Einzelplatte gemäß den Figuren 3 und 4,
- Fig. 6: schematisch einen Querschnitt durch einen der zu bearbeitenden Randbereiche der Einzelplatte mit darin in Eingriff befindlichen Schneidwerkzeugen einer ersten Frässtation der Maschine nach Fig. 5,
- Fig. 7 u. 8: einen Querschnitt durch den zu bearbeitenden Randbereich der Platte mit darin in Eingriff befindlichen Fräsern einer zweiten Frässtation der Maschine nach Fig. 5,
- Fig. 9: einen Querschnitt durch den zu bearbeitenden Randbereich der Platte nach Abschluß der Fräsarbeiten mit in den geschaffenen randlichen Aufnahmeraum eingebrachtem Kleber und darin einzuführender Rahmenleiste im Querschnitt,
- Fig. 10: eine der Fig. 9 entsprechende Darstellung bei teilweise in den randlichen Aufnahmeraum der Platte eingeführter Rahmenleiste,
- Fig. 11: eine Teildarstellung des Randbereichs der Platte im Schnitt in gegenüber Fig. 10 abgewandelter Ausführung,
- Fig. 12: einen Schnitt durch den Randbereich der Platte mit eingesetzter Rahmenleiste und angreifenden Werkzeugen einer Preßstation der Maschine nach Fig. 5 und
- Fig. 13: einen Querschnitt durch den Randbereich der Platte mit daran angreifenden Werkzeugen einer Bündigfrässtation der Maschine nach Fig. 5.

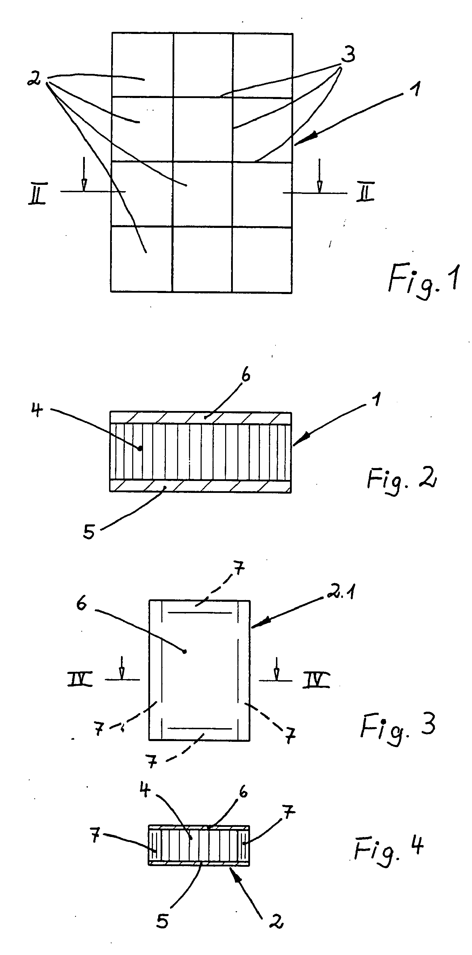

Im einzelnen zeigen die Figuren 1 und 2 eine großformatige Leichtbauplatte 1, die in Einzelplatten 2 aufgeteilt wird, wie es die in Fig. 1 angedeuteten Schnittlinien 3 veranschaulichen. Die großformatige Platte 1 weist Abmessungen in der Größenordnung von 2000 mm x 5000 mm auf, und die entsprechend kleineren Einzelplatten 2 können untereinander gleiche oder verschiedene Formate haben, je nachdem wie es für die Weiterverarbeitung der Einzelplatten 2 und für die optimale Ausnutzung der großformatigen Leichtbauplatte 1 erforderlich ist.

Der Aufbau der großformatigen Leichtbauplatte 1 und damit auch der Einzelplatten 2 ergibt sich aus Fig. 2. Diese Platten 1, 2 weisen eine Mittellage 4 auf, die aus einem leichtbauenden Billigwerkstoff besteht. Es kann sich dabei um Papplagen mit einer Wabenstruktur, um einen geschäumten Kunststoff oder geblähten Mineralstoff oder einen Verbund aus solchen Stoffen handeln.

An den Plattenbreitseiten ist die Mittellage 4 mittels einer unteren Decklage 5 und einer oberen Decklage 6 beplankt, was bedeutet, daß ein fester Verbund zwischen den Decklagen 5, 6 und der Mittellage 4 mit einer dadurch erzielten Sperrwirkung besteht. Im Verhältnis zur Dicke der Mittellage 4 sind die Decklagen 5 relativ dünn, was die erwünschte Sperrwirkung bei ausreichender Scherfestigkeit der Mittellage 4 nicht beeinträchtigt. Die Decklagen 5, 6 bestehen aus höherwertigen Materialien, wie Holz, Holzfaserplatten oder Laminaten, was sich je nach dem Verwendungszweck der vornehmlich für den Möbelbau oder den Innenausbau bestimmten Bauteile richtet, zu denen die Platten 2 nach der nachfolgend beschriebenen Bearbeitung weiterverarbeitet werden.

Aus den Figuren 3 und 4 geht eine fertige, formatierte Leichtbauplatte 2.1 hervor, die sich von den Einzelplatten 2 dadurch unterscheidet, daß in ihren Randbereichen die Mittellage 4 entfernt und durch Rahmenleisten 7 ersetzt ist, die aus einem festeren Werkstoff, wie Holz oder einem Holzfasermaterial, bestehen, der dazu geeignet ist, im Randbereich an die Platte 2.1 angeschraubte Teile, wie Scharnierbänder, Griffe oder dergleichen, sicher halten zu können.

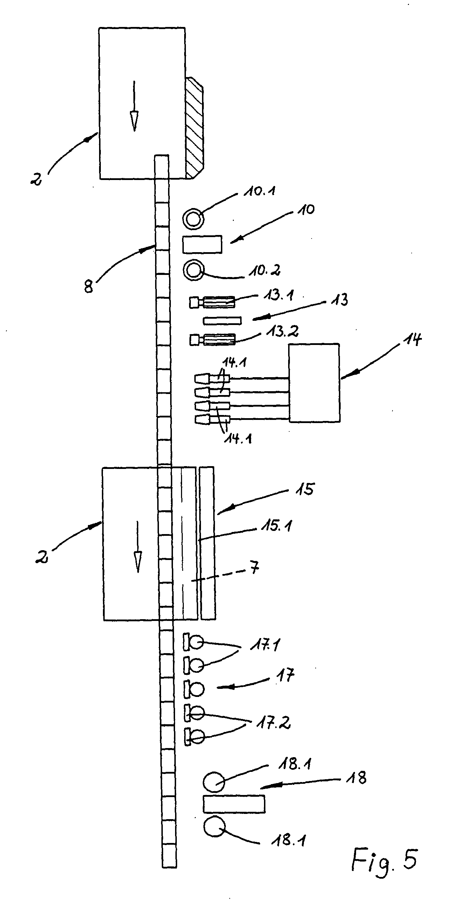

Fig. 5 zeigt eine Maschine mit einer Mehrzahl von Bearbeitungsstationen, um aus einer Einzelplatte 2, wie sie gemäß Fig. 1 von einer großformatigen Leichtbauplatte 1 abgeteilt wird, eine fertig formatierte Leichtbauplatte gemäß den Figuren 3 und 4 herzustellen. Bei der Maschine handelt es sich um eine Durchlaufmaschine, bei der die Platten 2 kontinuierlich entlang der Bearbeitungsstationen befördert werden. Dazu dient eine Transportvorrichtung 8, die sich in gerader Richtung entlang den Bearbeitungsstationen erstreckt und die zumindest eine Transportkette, auf der die Platten 2 aufliegen, und erforderlichenfalls einen die Platten 2 darauf niederhaltenden Oberdruck aufweist. Die Platten 2 werden von einem Zuführtisch 9 aus an die Transportvorrichtung 8 übergeben, entlang der in der Durchlaufrichtung hintereinander die einzelnen Bearbeitungsstationen angeordnet sind.

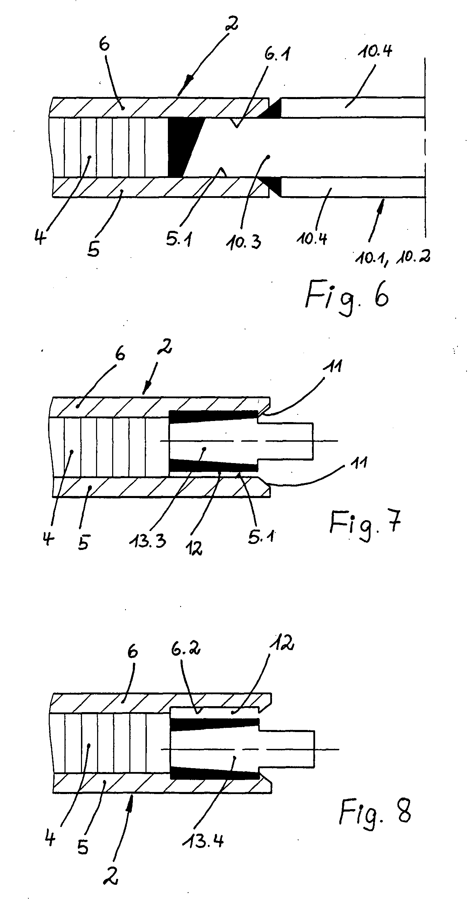

Die erste Bearbeitungsstation, welche die Platten 2 passieren, ist eine erste Frässtation 10 mit ersten Fräsaggregaten 10.1 und 10.2. Der Bearbeitungsvorgang, der mit den Fräsaggregaten 10.1 und 10.2 vorgenommen wird, geht im einzelnen aus Fig. 6 hervor.

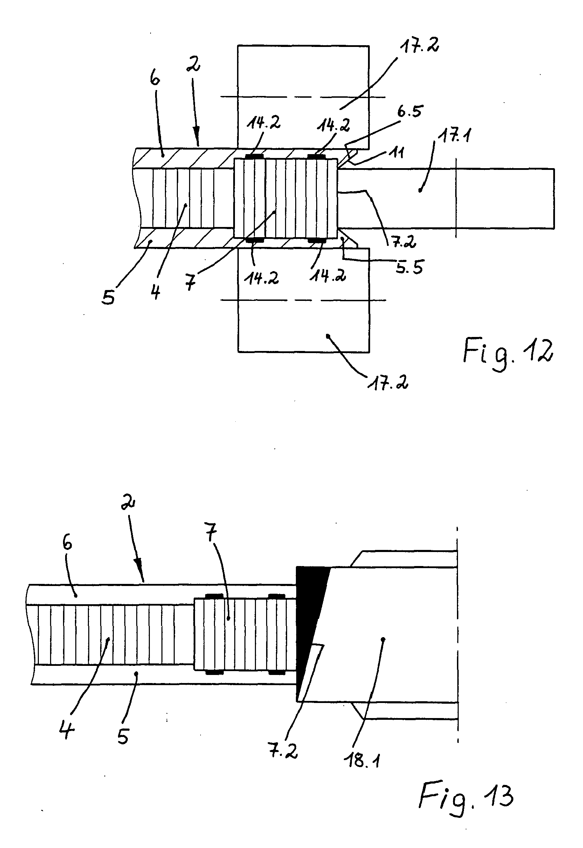

So weisen die Fräsaggregate 10.1, 10.2 ein Schneidwerkzeug 10.3 auf, welches an der ihm zugekehrten Schmalseite der Platte 2 aufgrund deren Vorschubs den Platten-Randbereich durchfährt, um in diesem Bereich die Mittellage 4 zu zerspanen. Zwischen den in der Durchlaufrichtung vorn und hinten liegenden Querseiten der Platte 2 durchdringt das Schneidwerkzeug 10.3 zwischen der unteren Decklage 5 und der oberen Decklage 6 den Plattenrand, und es ergibt sich danach ein Überstand der Decklagen 5, 6 über den verbliebenen Teil der Mittellage 4 im Plattenrandbereich. Die erste Frässtation 10 weist an den Bearbeitungsaggregaten 10.1, 10.2 weitere Schneidwerkzeuge 10.4 auf, mit denen an den längslaufenden, freien Kanten der Decklagen 5, 6 längslaufende Auflaufschrägen 11 bildende Fasen angeschnitten werden, die in den Figuren 7 - 10 zu erkennen sind. Diese Auflaufschrägen 11 konvergieren zur Mittenebene der Platte 2 hin und enden an den Innenseiten der Decklagen 5, 6. Auf die Funktion dieser Auflaufschrägen 11 wird nachstehend noch anhand der Beschreibung der Figur 10 eingegangen. Die Schneidwerkzeuge 10.3, 10.4 sind zwar justierbar, während ihres Betriebes befinden Sie sich jedoch auf feststehenden Positionen.

Auf die erste Frässtation 10 folgt in der Durchlaufrichtung eine zweite Frässtation 13 mit Fräsaggregaten 13.1 und 13.2, deren Bearbeitungsschritte an der Platte 2 im einzelnen aus den Figuren 7 und 8 hervorgehen. In diesen Figuren erkennt man einen Aufnahmeraum 12, der im Randbereich der Platte 2 zwischen den Decklagen 5 und 6 durch das Entfernen der Mittellage 4 freigelegt ist. Dieser Aufnahmeraum 12 erstreckt sich zunächst zwischen den noch unbearbeiteten, freiliegenden Innenseiten 5.1 und 6.1 der Decklagen 5, 6 und im Bereich dieser Innenseiten 5.1, 6.1 werden die Decklagen 5, 6 angeschnitten, um exakte Klebflächen 5.2, 6.2 zu bilden, die eine Referenzbasis für das Anbringen der Rahmenleisten 7 darstellen. Das erwähnte Anschneiden erfolgt mittels Walzenfräsern 13.3 und 13.4 der Fräsaggregate 13.1, 13.2 der zweiten Frässtation 13. Die beiden Walzenfräser 13.3, 13.4 sind mit ihren Fräserachsen parallel zur Platten-Durchlaufebene ausgerichtet, des weiteren stehen die Fräserach-sen senkrecht zur Durchlaufrichtung. Der erste Walzenfräser 13.3 ist in feststehender Position so angeordnet, daß er die randliche Innenseite 6.1 der oberen Decklage 6 anschneidet, um die Klebfläche 6.2 auszubilden. Analog ist der zweite Walzenfräser 13.4 relativ zum ersten Walzenfräser 13.3 nach unten hin versetzt in feststehender Lage angeordnet, um die Innenseite 5.1 im Randbereich der unteren Decklage 5 anzuschneiden und hier die Klebfläche 5.2 auszubilden.

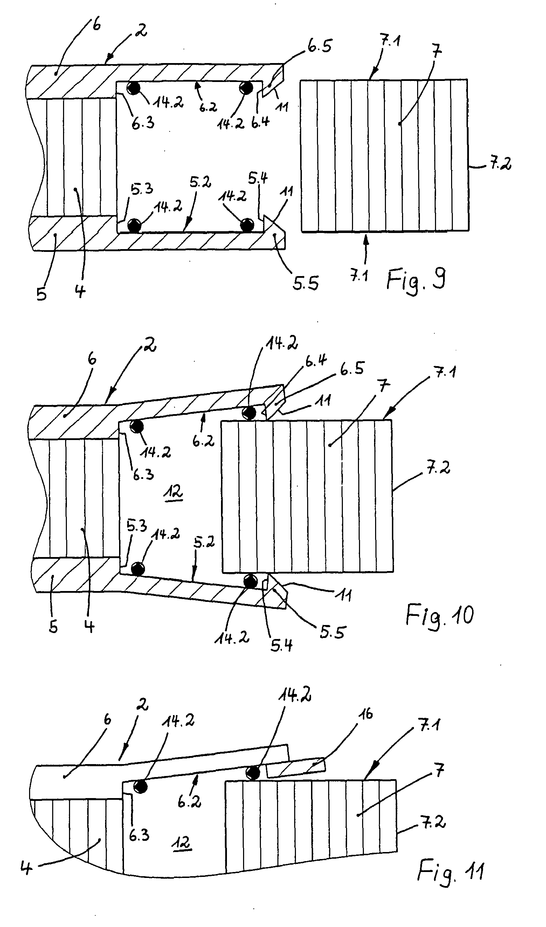

Die Walzenfräser 13.3, 13.4 der zweiten Frässtation 13 erfüllen noch eine weitere Aufgabe, dies ist besonders gut in Fig. 9 zu erkennen. Die Klebflächen 5.2 und 6.2 innenseitig an den Decklagen 5, 6 weisen je einen Absatz 5.3, 6.3 an der längslaufenden, zur Mittellage 4 der Platte 2 hin liegenden Seite auf. Ein gleicher Absatz 5.4, 6.4 findet sich jeweils an der gegenüberliegenden längslaufenden Seite der Klebflächen 5.2, 6.2. Diese Absätze 5.3, 6.3; 5.4, 6.4 bilden sich gleichzeitig mit dem Einschneiden der Klebflächen 5.2, 6.2 aus.

Zugleich werden im Bereich der freien Kanten der Decklagen 5, 6 nach außen hin an die Absätze 5.4, 6.4 anschließend Nasen 5.5, 6.5 ausgeformt, wobei sich diese beiden Nasen 5.5, 6.5 zur Mittenebene der Platte 2 hin vorspringend einander gegenüberliegen und sich daran außenseitig die weiter oben erwähnten Auflaufschrägen 11 befinden.

Der fertig ausgeformte Aufnahmeraum 12 hat einen quadratischen oder rechteckigen Querschnitt, welcher dem der darin einzubringenden Rahmenleiste 7 entspricht. Der Aufnahmeraum 12 wird von den Klebflächen 5.2, 6.2 und den Absätzen 5.3, 6.3 sowie 5.4, 6.4 umrissen.

Nach Verlassen der zweiten Frässtation 13 erreicht die Platte 2 eine Schmelzkleber-Abschmelzeinrichtung 14 mit Düsenköpfen 14.1, welche in den randlichen Aufnahmraum 12 der durchlaufenden Platte 2 hineinragen. Der verflüssigte Schmelzkleber wird in Gestalt von Raupen 14.2 entlang vorgegebener Linien auf die Klebflächen 5.2, 6.2, die den Aufnahmeraum 12 begrenzen, aufgetragen.

Die jeweils in den Aufnahmeraum 12 einzuschiebende Rahmenleiste 7 kommt aus einem Leistenmagazin 15, welches von der Platte 2 nachfolgend zu der Abschmelzstation 14 angefahren wird. Das Leistenmagazin 15 hat eine Eindrückvorrichtung 15.1, um jeweils eine der Rahmenleisten 7 durch die am Aufnahmeraum 12 längsseitige Öffnung zwischen den Nasen 5.5, 6.5 hindurch in den Aufnahmeraum 12 quer zur Leistenlängsrichtung einzuschieben. Dieser Vorgang ist in Fig. 10 dargestellt. Da die Nasen 5.5, 6.5 an den freien Längskanten der Decklagen 5, 6 die Einführöffnung des Aufnahmeraums 12 verengen, treten beim Vorschieben der Leiste 7 die an den Nasen 5.5, 6.5 befindlichen Auflaufschrägen 11 in Aktion. Sie spreizen die den Aufnahmeraum 12 begrenzenden Randbereiche der Decklagen 5, 6 voneinander weg, wobei sich diese Randbereiche hierbei vorzugsweise elastisch verbiegen.

Diese Maßnahme ist getroffen, um die Längsseiten 7.1 der Rahmenleiste 7 nicht sogleich auf die Klebflächen 5.2, 6.2, die den Aufnahmeraum 12 nach oben und nach unten hin begrenzen, auflaufen zu lassen. Ansonsten würde der zuvor auf die Klebflächen 5.2, 6.2 aufgetragene Klebstoff, insbesondere, wenn er die Form längslaufender Raupen aufweist, von der sich einschiebenden Rahmenleiste 7 mitgenommen und in Richtung zur Mittellage 4 der Platte 2 hin verdrängt werden. Dies würde zur Beeinträchtigung einer Klebung zwischen den Decklagen 5, 6 und der Rahmenleiste 7 vor allem nahe der äußeren Längskanten der Decklagen 5, 6 führen. Gerade in diesem Bereich kommt es jedoch auf eine besonders gute Verklebung an. Erst mit dem Erreichen der eingeschobenen Endlage kommen die Klebflächen 5.2, 6.2 der Decklagen 5, 6 in vollen Kontakt mit den Längsseiten 7.1 der Rahmenleiste 7, weil dann die Nasen 5.5, 6.5 an den Längskanten der Decklagen 5, 6 nicht mehr auf den Längsseiten 7.1 der Rahmenleiste 7 aufstehen und die Außenseite 7.2 der Rahmenleiste 7 übergreifen können.

Fig. 11 zeigt eine alternative Lösung, bei der auf die Ausbildung der Nasen 5.5, 6.5 an den Längskanten der Decklagen 5, 6 und auch auf die Anbringung der Auflaufschrägen 11 verzichtet werden kann. Hierzu werden beim Einschieben der Rahmenleiste 7 in die Öffnung des Aufnahmeraums 12 Anlaufschuhe 16 eingefahren, welche die Randbereiche der Decklagen 5, 6 voneinander weg spreizen und erforderlichenfalls die Rahmenleiste 7 führen.

In der Durchlaufrichtung hinter dem Leistenmagazin 15 erreicht die zu bearbeitende Platte 2 eine Preßstation 17, deren Funktion aus Fig. 12 ersichtlich ist. Die in den Aufnahmeraum 12 eingebrachte Rahmenleiste 7 ist zunächst im wesentlichen nur durch Formschluß gesichert und schlägt innenseitig an den Absätzen 5.3, 6.3 der Decklagen 5, 6 an. Um eine sichere Klebverbindung zu erreichen, werden die Randbereiche der Decklagen 5, 6, zwischen denen sich nun die Rahmenleiste 4 befindet, mittels Druckrollen 17.2 der Preßstation 17 gegen die Längsseiten 7.1 der Rahmenleiste 7 verpreßt. Weitere Druckrollen 17.1 beaufschlagen die Außenseite 7.2 der Rahmenleiste 7. Eine Mehr- oder Vielzahl der Druckrollen 17.1, 17.2 sind in der Durchlaufrichtung jeweils in tangentialer Richtung miteinander fluchtend an der Preßstation 17 vorgesehen, wie Fig. 5 zeigt. Aufgrund des Preßvorgangs in der Preßstation 17 verteilt sich der Kleber in den Fugen zwischen der Rahmenleiste 7 und den Klebflächen 5.2, 6.2 der Platten-Decklagen 5, 6.

Nachdem die Preßstation 17 durchlaufen ist, passiert die Platte 2 eine Bündigfrässtation 18 mit Bündigfräsaggregaten 18.1. Ergänzend dazu zeigt Fig. 13, daß mit Walzenfräsern 18.2 der Bündigfräsaggregate 18.1 die Außenseite 7.2 der Rahmenleiste 7 und die an der Platte 2 längslaufenden Kanten der Decklagen 5, 6 bündig gefräst werden. Hierbei werden die Nasen 5.5, 6.5 mit den Auflaufschrägen 11 weggeschnitten.

Die vorstehend erläuterte, an einem der Längsränder der Platte 2 erfolgte Bearbeitung wird in gleicher Weise an den drei weiteren Längsrändern der Platte 2 vorgenommen. So erhält man die fertig formatierte Leichtbauplatte, wie sie in den Figuren 3 und 4 dargestellt ist.

## Patentansprüche

1. Verfahren zum Herstellen von formatierten Leichtbauplatten mit einer leichtgewichtigen Mittellage, mit einer oberen Decklage sowie einer unteren Decklage, mit denen die Mittellage beplankt ist, und mit randlichen Rahmenleisten aus einem festen Werkstoff, wie Holz oder einem Holzersatzstoff, die zwischen über die Mittellage hinausreichenden Randbereichen der Decklagen fest angeordnet sind,
**dadurch gekennzeichnet,**
**daß** eine großformatige Leichtbauplatte, welche die leichtgewichtige Mittellage und die diese beplankenden Decklagen aufweist, in Einzelplatten mit an den Schmalseiten offenliegender Mittellage aufgeteilt wird und danach an jeder dieser einzelnen Platten an den Schmalseiten die Rahmenleisten eingebracht werden, indem in einem maschinellen Durchlaufverfahren entlang der jeweiligen Platten-Schmalseite zwischen den Decklagen die Mittellage unter Freilegen eines an die vorgesehene Rahmenleiste angepaßten Aufnahmeraums weggeschnitten und im Anschluß daran in diesen Aufnahmeraum die Rahmenleiste eingeklebt wird.

2. Verfahren nach Anspruch 1,
**dadurch gekennzeichnet,**
**daß** nach dem Wegschneiden der Mittellage zunächst auf die zum freigelegten Aufnahmeraum hin liegenden Innenseiten der Decklagen ein Kleber aufgetragen und danach die Rahmenleiste durch die an der Platte längsseitige Öffnung des Aufnahmeraums quer eingeschoben wird.

3. Verfahren nach Anspruch 1 oder 2,
**dadurch gekennzeichnet,**
**daß** beim Wegschneiden der Mittellage die zum Aufnahmeraum hin liegenden Innenseiten der Decklagen zur Ausbildung von Kleb-flächen daran angeschnitten werden.

4. Verfahren nach Anspruch 3,
**dadurch gekennzeichnet,**
**daß** bei zumindest einer der beiden Decklagen an der zur Mittellage hin liegenden Seite der Klebfläche ein Absatz für einen Anschlag der Rahmenleiste eingeschnitten wird.

5. Verfahren nach einem der Ansprüche 2 - 4,
**dadurch gekennzeichnet,**
**daß** beim Einschieben der Rahmenleiste der freigelegte Aufnahmeraum nach außen hin durch Spreizen der Randbereiche der beiden Decklagen erweitert wird.

6. Verfahren nach Anspruch 5,
**dadurch gekennzeichnet,**
**daß** in die an der Platte längsseitige Öffnung des Aufnahmeraums für die Rahmenleiste Spreizschuhe eingefahren werden.

7. Verfahren nach Anspruch 5 oder 6,
**dadurch gekennzeichnet,**
**daß** an den an der Platte längslaufenden Endkanten der Randbereiche der Decklagen die Öffnung des Aufnahmeraums bis unter die Dicke der Rahmenleiste verengende Nasen beim Anschneiden der Innenseiten der Decklagen ausgebildet werden und an diesen Nasen äußere Auflaufschrägen angeschnitten werden, die in Richtung zum Innern des Aufnahmeraums konvergieren.

8. Verfahren nach Anspruch 7,
**dadurch gekennzeichnet,**
**daß** nach dem Einschieben der Rahmenleiste in den Aufnahmeraum bis hinter die vorstehenden Nasen die Kanten an den Randbereichen der Decklagen unter Entfernen der Nasen mit der Aussenseite der Randleiste bündig geschnitten werden.

9. Maschine zum Herstellen von formatierten Leichtbauplatten mit einer leichtgewichtigen Mittellage und einer oberen sowie unteren Decklage und mit randlichen Rahmenleisten aus einem festen Werkstoff, wie Holz, die zwischen über die Mittellage hinausreichenden Randbereichen der Decklagen fest angeordnet sind, wobei von einer großformatigen Leichtbauplatte abgeschnittene Einzelplatten mit an den Schmalseiten freiliegender Mittellage verwendet werden gemäß dem Verfahren nach einem der Ansprüche 1 - 8,
**dadurch gekennzeichnet,**
**daß** es sich um eine Durchlaufmaschine mit einer Transportvorrichtung (8) für die Einzelplatten (2) handelt, an welcher in Durchlaufrichtung nacheinander eine erste Frässtation (10) mit ersten Fräsaggregaten (10.1, 10.2) zum Entfernen der Mittellage (4) zwischen den Randbereichen der Platten-Decklagen (5, 6), eine zweite Frässtation (13) mit zweiten Fräsaggregaten (13.1, 13.2) zum Anschneiden der Klebflächen (5.2, 6.2) an den Innenseiten (6.1, 6.2) der Platten-Decklagen (5, 6) in deren Randbereichen, eine Schmelzkleber-Abschmelzeinrichtung (14) mit Düsenköpfen (14.1) zum Aufbringen von Schmelzkleber auf diese Klebflächen (5.2, 6.2) und ein Leistenmagazin (15) mit einer Eindrückvorrichtung (15.1) zum Einschieben je einer Rahmenleiste (7) in den durch das Wegschneiden der Mittellage (4) gebildeten Aufnahmeraum (12) zwischen den Platten-Deckla-gen (5,6) angeordnet sind.

10. Maschine nach Anspruch 9,
**dadurch gekennzeichnet,**
**daß** die ersten Fräsaggregate (10.1, 10.2) der ersten Frässtation (10) erste Schneidwerkzeuge (10.3) in feststehender Lage zum Zerspanen der Mittellage (4) und zweite Schneidwerkzeuge (10.4) in feststehender Position zur Anbringung je einer Auflaufschräge (11) an den Kanten der Platten-Decklagen (5, 6) aufweisen.

11. Maschine nach Anspruch 9 oder 10,
**dadurch gekennzeichnet,**
**daß** die zweiten Fräsaggregate (13.1, 13.2) der zweiten Frässtation (13) achsparallele Walzenfräser (13.3, 13.4) mit einem Durchmesser haben, der kleiner als die Dicke der Platten-Mittellage (4) ist, wobei die Fräserachsen parallel zur Platten-Durchlaufebene sowie senkrecht zur Durchlaufrichtung stehen und die Walzenfräser (13.3, 13.4) feststehend so angeordnet sind, daß der eine Walzenfräser (13.3) die über ihn hinweglaufende Innenseite (6.1) der oberen Platten-Decklage (6) und der andere Walzenfräser (13.4) die unter ihm hindurchlaufende Platten-Decklage (5) jeweils unter Ausbildung der Klebflächen (5.2, 6.2) anschneidet.

12. Maschine nach einem der Ansprüche 9 - 11,
**dadurch gekennzeichnet,**
**daß** in Durchlaufrichtung an das Leistenmagazin (15) eine Preßstation (17) mit Druckrollen (17.1, 17.2) anschließt, welche die Randbereiche der beiden Platten-Decklagen (5, 6) jeweils von außen und die Außenseite (7.2) der in den Auf-nahmeraum (12) zwischen diesen Randbereichen eingebrachten Rahmenleiste (7) beaufschlagen.

13. Maschine nach Anspruch 12,
**dadurch gekennzeichnet,**
**daß** in Durchlaufrichtung an die Preßstation (17) eine Bündigfrässtation (18) mit Bündigfräsaggregaten (18.1) zum Bündig-fräsen der Kanten der Randbereiche der Platten-Decklagen (5, 6) und der Außenseite (7.2) der Rahmenleiste (7) anschließt.
